(19) Europäisches Patentamt
European Patent Office
Office européen des brevets

(11) **EP 1 867 613 B1**

(12) **EUROPÄISCHE PATENTSCHRIFT**

(45) Veröffentlichungstag und Bekanntmachung des Hinweises auf die Patenterteilung:
**29.07.2015 Patentblatt 2015/31**

(51) Int Cl.:
***C03C 17/00*** *(2006.01)*   ***C03C 17/04*** *(2006.01)*
***C03C 8/18*** *(2006.01)*   ***C03C 17/10*** *(2006.01)*

(21) Anmeldenummer: **07110189.3**

(22) Anmeldetag: **13.06.2007**

(54) **Kochfeld mit einer Glaskeramikplatte als Kochfläche**

Hob with ceramic cooking plates

Champ de cuisson doté d'une plaque vitrocéramique comme surface de cuisson

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **16.06.2006 DE 102006027739**

(43) Veröffentlichungstag der Anmeldung:
**19.12.2007 Patentblatt 2007/51**

(73) Patentinhaber: **Schott AG**
**55122 Mainz (DE)**

(72) Erfinder:
• **Striegler, Harald**
  **55437, Ockenheim (DE)**
• **Wennemann, Dietmar**
  **55234, Albig (DE)**
• **Lukas, Annette**
  **63517, Rodenbach (DE)**

(74) Vertreter: **Fuchs Patentanwälte Partnerschaft mbB**
**Patentanwälte**
**Postfach 46 60**
**65036 Wiesbaden (DE)**

(56) Entgegenhaltungen:
**EP-A- 1 264 806**   **EP-A- 1 364 924**
**EP-A- 1 416 227**   **EP-A- 1 770 071**
**EP-A2- 0 296 312**   **EP-A2- 1 206 165**
**EP-A2- 1 267 593**

• **GÜNTER LANDGRAF ED - SCHMIDBAUR H: "Gold in Decoration of Glass and Ceramics", 1 January 1999 (1999-01-01), GOLD: PROGRESS IN CHEMISTRY, BIOCHEMISTRY AND TECHNOLOGY, JOHN WILEY & SONS LTD, CHICHESTER (U.A.), PAGE(S) 143 - 171, XP002546349, ISBN: 978-0-471-97369-0 * page 153 ***

EP 1 867 613 B1

## Beschreibung

Die Erfindung bezieht sich auf ein Kochfeld mit einer Glaskeramikplatte als Kochfläche, welche aus einem nicht eingefärbtem Glaskeramikmaterial besteht sowie, welche mindestens ein Sichtfenster und eine blickdichte unterseitige Beschichtung aufweist, die im Bereich des Sichtfensters, das mit einer gesonderten Beschichtung versehen ist, ausgespart ist.

Moderne Küchen besitzen typischerweise Kochfelder mit einer Glaskeramikplatte als Kochfläche. Um bei Draufsicht den Blick in das Kochfeldinnere zu verhindern, denn der Blick in das Innere des Kochgerätes, z. B. auf die Heizeinrichtungen, die Leiterplatinen etc., ist aus ästhetischen Gründen unerwünscht, wird typischerweise das Glas, aus dem die zu keramisierende Vorläuferglasplatte, auch Grünglasplatte genannt, hergestellt wird, in der Schmelze eingefärbt. Sie erscheint dadurch in der Draufsicht dunkel bis schwarz, d. h. gewährleistet so die notwendige Blickdichtheit.

Wird eine nicht in der Schmelze eingefärbte, d. h. eine transparente Grünglasplatte hergestellt und diese so keramisiert, dass überwiegend Hochquarz-Mischkristalle vorliegen, dann ist die Glaskeramikplatte auch für das sichtbare Licht transparent. Um hier die notwendige Blickdichtheit zu erzielen, erhalten die transparenten Glaskeramikplatten in bekannter Weise eine blickdichte unterseitige Beschichtung, ggf. in Verbindung mit einem oberseitigen Dekor.

Moderne Glaskeramik-Kochflächen weisen Sichtfenster auf, in denen der Betriebszustand, z. B die gewählte Heizstufe oder die Restwärme in den Kochzonen, durch Leuchtmittel angezeigt wird. In der Nähe der Sichtfenster oder in dem Sichtfenster selbst befinden sich in der Regel auch Funktionsbereiche, mit denen bei Berührung die Kochzonen zuund abgeschaltet werden können oder die Heizstufe eingestellt werden kann. Die Umwandlung der Berührung in ein elektrisches Signal erfolgt dabei durch sogenannte "Touch-Sensoren" unterhalb der Glaskeramik.

Sichtfenster, hinter denen zusätzlich zu Leuchtmitteln "Touch-Sensoren" angeordnet sind, werden im folgenden als Displaybereich bezeichnet.

Damit die Leuchtmittel (z. B. Glühlampen, LEDs, LCDs oder OLEDs), die sich hinter dem Sichtfenster unterhalb der Glaskeramik-Kochfläche befinden, unter üblichen Bedingungen in der Küche gut lesbar sind, muss die Glaskeramik-Kochfläche mindestens in dem Bereich oberhalb der Leuchtmittel, d. h. im Sichtfenster, für die Wellenlänge des jeweils emittierten Lichts ausreichend transparent sein. Diese Anforderung verbietet in dem Displaybereich eine dichte oberseitige Dekorierung oder blickdichte unterseitige Beschichtungen.

Daher werden zur Erzeugung von Sichtfenstern, neben sparsamer oberseitiger Dekoration, insbesondere bei Glaskeramik-Kochflächen aus farbloser Glaskeramik, lichtundurchlässige, blickdichte Unterseitenbeschichtungen in dem Bereich der Sichtfenster ausgespart.

Die Aussparung einer Beschichtung bei Glaskeramik-Kochflächen oberhalb einer Leuchtanzeige wurde erstmals 1991 in der EP 0 438 656 B1 beschrieben. Ziel war es, den Betriebszustand einer Kochzone durch ein beleuchtetes Symbol (Kreis, Strich oder Ring) anzuzeigen. In der Schrift wird offen gelassen, ob sich die ausgesparte Beschichtung ober- oder unterseitig auf der Glaskeramik befindet.

Die EP 1 435 759 B1 beschreibt die Aussparung glasbasierter Unterseitenbeschichtungen bei farblosen Glaskeramik-Kochflächen oberhalb der Leuchtanzeigen. Ebenfalls wird diese Möglichkeit in der EP 1 267 593 B1 sowie in der JP(A)2003 338 359 erwähnt.

In JP(A)2003 338 360 wird dabei als Unterseitenbeschichtung ein zweischichtiger Aufbau genannt, eine glasbasierte, blickdichte Beschichtung aus einer Lüsterfarbe als erste Lage, auf der sich als zweite Lage eine organische, z. B. siliconbasierte Beschichtung befindet. Beide Schichten müssen im Sichtfensterbereich oberhalb der Leuchtanzeigen ebenfalls ausgespart werden.

Die Aussparung gesputterter Unterseitenbeschichtungen zur Erzeugung von Sichtfenstern wird in der JP(A)2005 090 906 und WO/03 098 115 A1 vorgeschlagen, wobei die Anzeigequalität durch ober- und unterseitige Antireflexions-Schichten gesteigert werden kann.

In der DE 299 02 875 U1 wird durch die teilweise Aussparung einer unterseitigen, lichtundurchlässigen Beschichtung einer dunkel eingefärbten Glaskeramik-Kochfläche die Leuchtanzeige um den Heißbereich so gestaltet, dass z. B. statt eines leuchtenden Ringes nur Punkte oder Buchstaben sichtbar sind.

Die EP 1 267 593 A2 offenbart eine Kochfläche zur Verwendung in einer Kochvorrichtung, welche eine Infraroteizeinheit aufweist, die eine lichtdurchlässige kristallisierte Glasplatte mit einer oberen Oberfläche, auf der Lebensmittel erwärmt werden, und einer unteren Oberfläche, die sich der Infraroteizeinheit gegenüber befindet, einen dekorativen Film, der gänzlich oder teilweise auf der oberen Oberfläche aufgetragen ist, wobei der dekorative Film ein erstes anorganisches Pigment umfasst, und einen lichtabdunkelnden Film umfasst, der gänzlich oder teilweise auf der unteren Oberfläche aufgetragen ist, wobei der lichtabdunkelnde Film ein zweites anorganisches Pigment aufweist. Während - wie bei der zuletzt genannten Schrift - bei eingefärbten Glaskeramik-Kochflächen, z. B. bei einer Glaskeramik, die unter der Marke CERAN SUPREMA® im Handel ist, durch die Aussparung der Unterseitenbeschichtung keine schwerwiegenden ästhetischen Einbußen hingenommen werden müssen, kann bei farblosen Glaskeramiken, besonders wenn die Leuchtanzeigen ausgeschaltet sind, im Bereich des Sichtfensters direkt in die Kochmulde hineingesehen werden, weil dort die Unterseitenbeschichtung ausgespart ist. Der Blick in das Innere des Gerätes, hier z. B. auf die Leiterplatinen, die betriebslosen LEDs etc., ist, wie eingangs bereits erwähnt, aus ästhetischen Gründen unerwünscht.

Deshalb wird in der JP(A)2003 086 337 ein zweischichtiger Aufbau der unterseitigen Beschichtung einer farblosen Glaskeramik-Kochfläche vorgeschlagen, der aus einer ersten Schicht mit Effektpigmenten, die für das Licht der Leuchtanzeigen durchlässig ist und einer zweiten, lichtundurchlässigen Schicht mit schwarzem Pigment, z. B. Fe-Cr-Co-Spinell besteht. Wenn bei diesem Schichtaufbau nur die zweite Schicht oberhalb der Leuchtanzeige ausgespart wird, ist die eingeschaltete Leuchtanzeige durch die Effektpigmentschicht hindurch sichtbar, während bei ausgeschalteter Leuchtanzeige das Innere der Kochmulde durch die Effektpigmentschicht ausreichend verdeckt wird. Dasselbe Prinzip wird auch in JP(A)2003 297 540 vorgeschlagen.

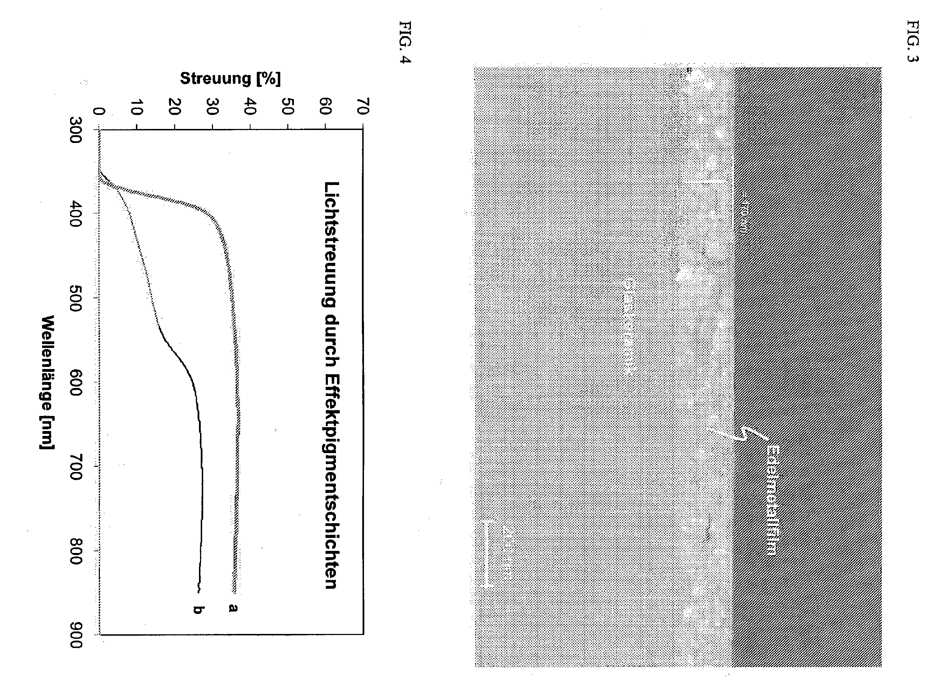

Die unterseitige Beschichtung des Displaybereichs mit einer Effektpigmentschicht hat jedoch den Nachteil, dass die Effektpigmentschicht aufgrund der fehlenden schwarzen Deckschicht bei dem Transport oder dem Einbau der Kochfläche in eine Kochmulde leicht verkratzt werden kann. Ferner wird das Licht der Leuchtmittel durch die Effektpigmente merklich gestreut, weil die Pigmente einige Mikrometer groß sind, so dass die Leuchtanzeige unscharfe Ränder bekommt, also vom Benutzer verschwommen wahrgenommen wird. Aus Fig. 4 ist ersichtlich, dass der Anteil des gestreuten Lichts derartiger Sichtfenster, wie sie Kochflächen des Marktes haben, bis über 30 % betragen kann. Aufgrund der großen Streuung sind die Leuchtanzeigen undeutlich erkennbar. Sichtfenster mit Effektpigmentschichten können daher, falls unter ihnen Segmentanzeigen, die die Heizstufe anzeigen, angeordnet sind, aufgrund schlecht lesbarer Anzeigewerte sogar ein Sicherheitsrisiko darstellen.

Auch bei gefärbten Glaskeramiken kann das Licht der Leuchtanzeigen gestreut werden, z. B. von ausreichend großen Mikrokristalliten in der milchig trüb gefärbten Glaskeramik, die in der US 2005/0224491 A1 genannt wird.

Oft weisen gefärbte Glaskeramiken auf der Unterseite auch Noppen auf, die zu einer Verzerrung der Leuchtanzeige führen. Aus diesem Grunde wird in o. g. Schrift, wie auch in DE 041 04 983 C1, um im Displaybereich eine glatte Unterseite zu erzeugen, die Anwendung einer farblosen Siliconschicht empfohlen.

Die zur Zeit beste, bekannte Lösung zur Herstellung von Sichtfenstern bei transparenten, nicht eingefärbten Glaskeramikkochflächen, die das Licht der Leuchtanzeigen nur wenig streuen und die Sicht in das Geräteinnere verhindern, ist die unterseitige Beschichtung der Glaskeramik im Bereich der Sichtfenster mit Edelmetallpräparaten. Derart ausgebildete Kochflächen sind auch kommerziell erhältlich.

Da die Edelmetallbeschichtungen keine Pigmente enthalten, streuen sie das sichtbare Licht (Wellenlängenbereich 400 - 750 nm) kaum. Die Streuung des sichtbaren Lichts beträgt im Bereich derartiger Sichtfenster 1 - 3 %, so dass unterhalb des Sichtfensters angebrachte Leuchtmittel relativ klar erkannt werden können. Fig. 5a und Fig. 5b zeigen beispielsweise den Anteil und den Verlauf der Streuung bei zwei verschiedenen kommerziellen Kochflächen; Fig. 6a zeigt eine Segmentanzeige im Sichtfenster einer kommerziellen Kochfläche. Gleichzeitig wird von der meist schwarzbraunen Edelmetallbeschichtung, die für sichtbares Licht eine Transmission von ca. 0 - 45 % (Fig. 7a) hat, die Sicht in das Geräteinnere ausreichend stark eingeschränkt.

Die Edelmetallbeschichtungen haben ferner eine sehr geringe elektrische Leitfähigkeit. Ihr Flächenwiderstand liegt bei über 1 MΩ/Quadrat. Dadurch können unterhalb der Edelmetallbeschichtungen nicht nur die Leuchtmittel, sondern auch Touch-Sensoren, die nach dem kapazitiven Prinzip arbeiten, angeordnet und betrieben werden. Touch-Sensoren, die nach dem kapazitiven Prinzip arbeiten, sind bei heutigen Kochmulden Standard, und es ist üblich, die Sensoren neben den Leuchtmitteln im Bereich des Sichtfensters anzuordnen und auf diese Weise Displaybereiche zu gestalten.

Die mechanische Beständigkeit der Edelmetallschichten ist für den Transport, die Montage und den Betrieb im Kochfeld vollkommen ausreichend.

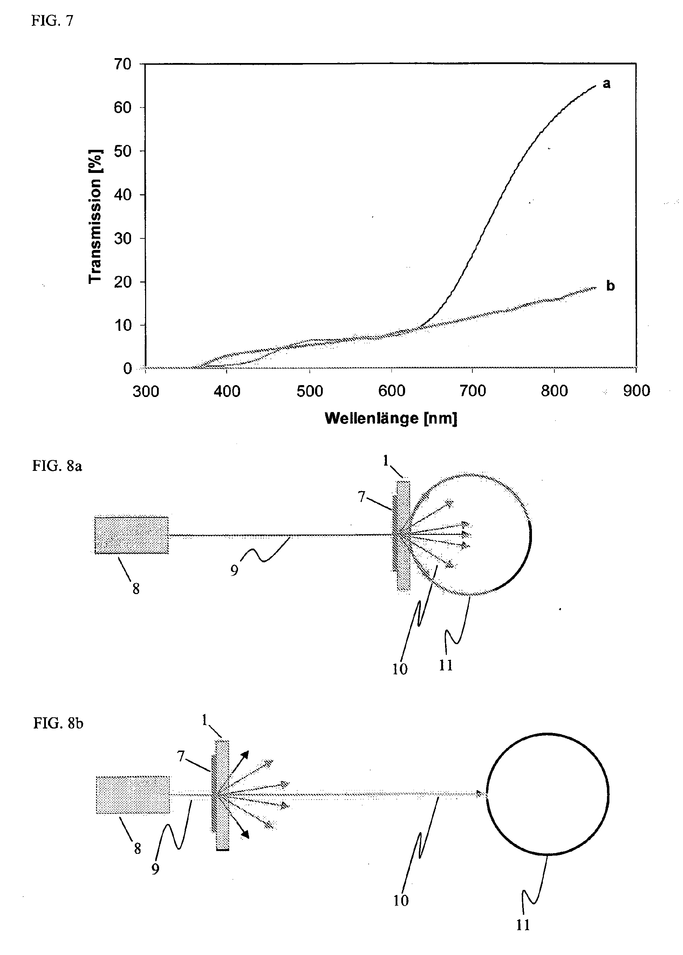

Die Transmissionskurve Fig. 7a zeigt, dass die bekannten Edelmetallschichten für violettes Licht nahezu undurchlässig sind (nur ca. 0,6 % Transmission bei 400 nm), während sie für rotes Licht extrem gut durchlässig sind (ca. 20 - 45 % Transmission bei 700 - 750 nm).

Da die bekannten Edelmetallbeschichtungen für Licht der Wellenlänge 400 - 450 nm nahezu undurchlässig sind, haben sie den Nachteil, dass f sie für violette oder dunkelblaue Leuchtanzeigen ungeeignet sind. Weil die bekannten Edelmetallbeschichtungen für das sichtbare Licht (Wellenlängenbereich 400 - 750 nm) insgesamt unterschiedlich stark durchlässig sind, haben sie außerdem den Nachteil, dass sie auch für mehrfarbige Displays, d.h. Leuchtanzeigen, die zur Darstellung von Informationen mehrere Bunttöne einsetzen, weniger gut geeignet sind. Denn eine mehrfarbige Leuchtanzeige wird, wenn die bekannten Edelmetallbeschichtungen zur Gestaltung des Sichtfensters eingesetzt werden, aufgrund der wellenabhängigen Transmission dieser Edelmetallschichten die einzelnen Farben in unterschiedlicher Intensität erscheinen lassen, so dass die Leuchtanzeige hinsichtlich der Intensität der einzelnen Farben unausgewogen erscheinen wird. Mehrfarbige Leuchtanzeigen oder auch die elegant aussehenden dunkelblauen Leuchtanzeigen werden jedoch in Zukunft mit der fortschreitenden Verbreitung elektronischer Funktionen auch bei Kochflächen immer häufiger eingesetzt werden.

In violett oder dunkelblau angezeigte Informationen können aufgrund der geringen Transmission der zur Zeit eingesetzten Edelmetallschichten in dem betreffenden Wellenlängenbereich (400 - 450 nm) nicht oder nur in geringer Lichtintensität dargestellt werden, während in rot (700 - 750 nm Wellenlänge) angezeigte Informationen extrem intensiv dargestellt und entsprechend hell wahrgenommen werden. Die unterschiedliche Intensität der angezeigten Farben, insbesondere das intensive rot, für das das menschliche Auge ohnehin am empfindlichsten ist, könnte bei dem Benutzer der Kochfläche einen unangenehmen Eindruck erzeugen.

Die Bunttöne können entweder durch Leuchtmittel, die die jeweilige Wellenlänge emittieren oder eleganter durch additive Farbmischung der primären Spektralfarben rot, grün und blau erzeugt werden. Unter Bunttönen wird die gesamte Farbpalette von violett (400 nm) über blau (450 nm), grün (550 nm), gelb (600 nm), orange (650 nm) bis hin zu rot (700 nm) und dunkelrot (750 nm) verstanden (Wellenlängen aus: Hollemann-Wiberg, Lehrbuch der anorganischen Chemie, 91-100. Auflage, Walter de Gruyter, Berlin, 1985, S. 103). Die derzeit eingesetzten Edelmetallschichten beeinträchtigen bei beiden Verfahren die Darstellung farbiger Informationen.

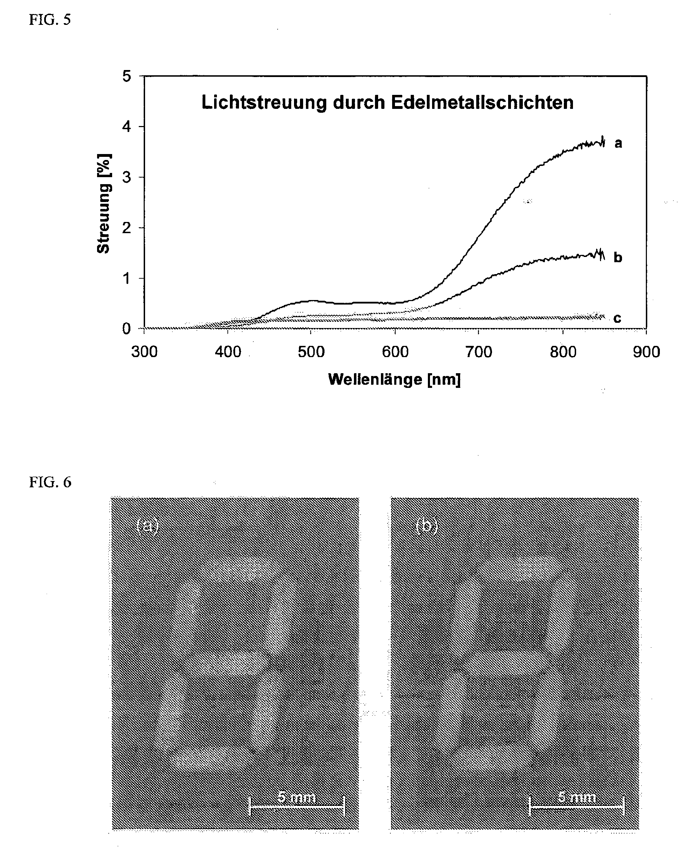

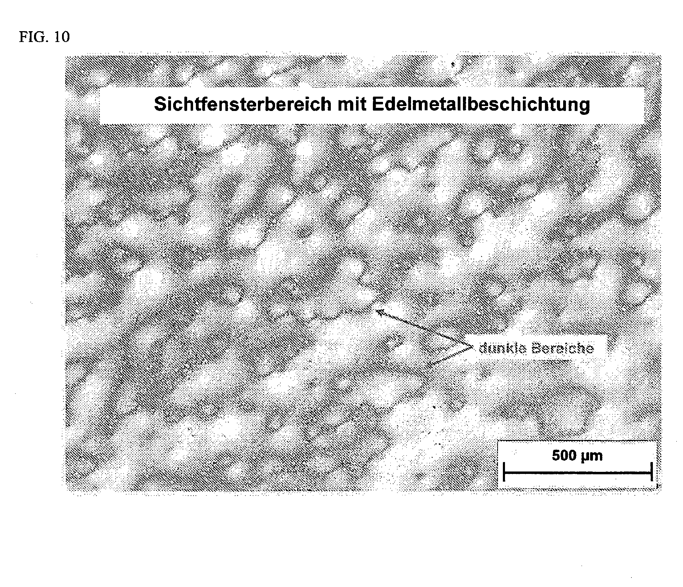

Ein weiterer Nachteil der Sichtfenster der einschlägigen kommerziellen Kochflächen ist, dass die Leuchtanzeigen sehr viele kleine, dunkle Bereiche aufweisen (Fig. 6a, Fig. 10). Dadurch erscheinen die leuchtenden Segmente einer z.B. siebenteiligen Leuchtanzeige "fleckig". Erstrebenswert wäre, insbesondere bei hochwertigen Kochflächen, dass ein unter der Glaskeramik-Kochfläche angeordnetes Leuchtmittel einen homogen erleuchteten Bereich erzeugt.

Zusammenfassend ist daher festzustellen, dass die bekannten Lösungen für die Beschichtung der Sichtfensterbereiche von Kochflächen aus nicht eingefärbter, transparenter, insbesondere beidseitig glatter Glaskeramik hinsichtlich der Durchlässigkeit für das sichtbare Licht und der Klarheit der Leuchtanzeige nicht zufriedenstellend sind.

Es ist daher die Aufgabe der Erfindung, Sichtfensterbereiche für eingefärbte, transparente Glaskeramik-Kochflächen zu entwickeln,

- die für alle Wellenlängen im Bereich des sichtbaren Lichts (Wellenlängenbereich 400 - 750 nm) eine möglichst gleich große Transmission haben sowie
- durch welche die unterhalb der Glaskeramikplatte angebrachten Leuchtmittel klar hindurch scheinen und
- durch die das Licht der Leuchtmittel höchstens zu 3% gestreut wird, Displays oder andere Leuchtanzeigen also klar und deutlich (unverschwommen) bei Sicht auf die eingebaute Kochfläche erkennen lässt
- die ausreichend transparent sind, so dass gängige Leuchtmittel hell genug durch die Glaskeramik-Kochfläche hindurchleuchten
- die dennoch ausreichend blickdicht sind, so dass das Innere der Kochmulde ausreichend verdeckt wird
- die beständig gegen mechanische Belastung (Verkratzen) sind, und
- welche die Anordnung von Touch-Sensoren, die nach dem kapazitiven Prinzip arbeiten, erlauben.

Die Lösung dieser Aufgabe gelingt bei einem Kochfeld mit einer Glaskeramikplatte als Kochfläche, welche aus einem nicht eingefärbtem Glaskeramikmaterial besteht sowie welche mindestens ein Sichtfenster und eine blickdichte unterseitige Beschichtung aufweist, die in dem Bereich des Sichtfensters, das mit einer gesonderten Beschichtung versehen ist, ausgespart ist, gemäß der Erfindung dadurch, dass
die gesonderte Beschichtung

- aus einem eingebrannten Edelmetallpräparat gebildet ist und einen elektrischen Flächenwiderstand über 1 Megaohm/Quadrat hat, und

dass die beschichtete Glaskeramikplatte im Bereich des Sichtfensters für das sichtbare Licht (400 nm - 750 nm)

- eine Transmission im Bereich von 1,0 bis 21,0 % sowie
- eine Streuung im Bereich von 0,0 bis 1,0 % hat, und

dass die gesonderte Beschichtung aus Gold oder Platin oder Palladium oder Legierungen davon besteht und Oxide von Halbmetallen oder Oxide unedler Metalle enthält, und
dass der Anteil der Oxide in der gesonderten Beschichtung mindestens 15 Gew.-% bezogen auf den eingebrannten Edelmetallfilm beträgt.

Ausgestaltungen und Weiterbildungen der Erfindung sind in Unteransprüchen gekennzeichnet und ergeben sich auch aus der Figurenbeschreibung.

Anhand eines in den Zeichnungen dargestellten Ausführungsbeispieles eines Kochfeldes mit einer Glaskeramikplatte als Kochfläche, dessen Sichtfenster gemäß der Erfindung beschichtet ist, in Verbindung mit mikroskopischen Aufnahmen sowie Diagrammen, wird die Erfindung näher erläutert.

Es zeigen:

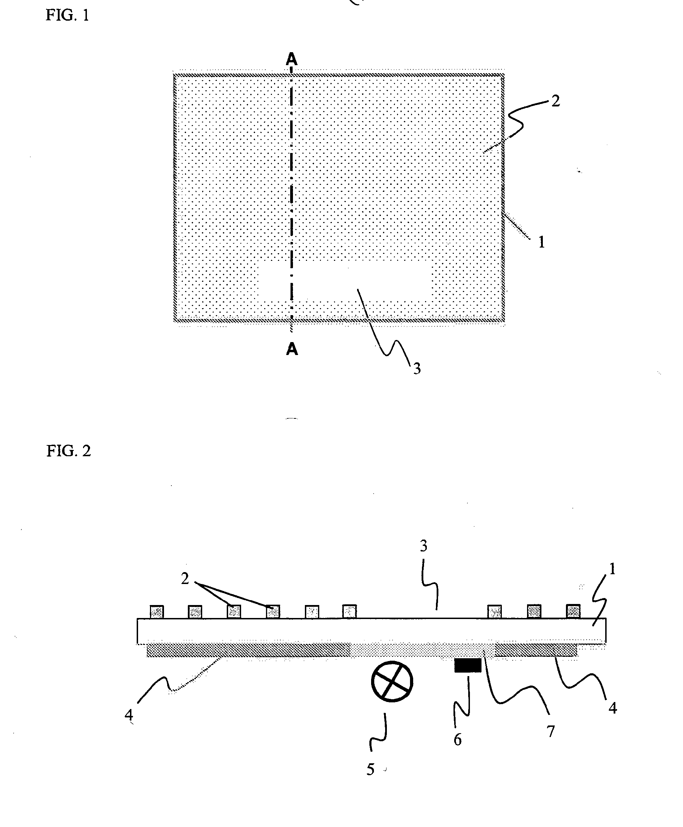

Fig. 1     eine Draufsicht auf eine Glaskeramik-Kochfläche mit rechteckigem, erfindungsgemäß beschichteten Displaybereich,

Fig. 2     eine schematische Querschnittsdarstellung der Kochfläche mit Displaybereich nach Fig. 1 entlang Linie A - A,

Fig.3      die Darstellung der Gefügestrukturanalyse einer schwarzen Unterseitenbeschichtung mit hohem elektrischen Flächenwiderstand im Displaybereich, hergestellt aus dem Edelmetallpräparat GPP 010106 der Fa. HERAEUS,

Fig. 4    eine Graphik mit dem Verlauf der wellenlängenabhängigen Streuung von Glaskeramik-Kochflächen im Bereich der Sichtfenster, die unterseitig mit Effektpigmentschichten versehen sind. Dargestellt ist die Streuung bei zwei bekannten Kochflächen (a) und (b),

Fig. 5    eine Graphik mit dem Verlauf der wellenlängenabhängigen Streuung von Glaskeramik-Kochflächen im Bereich der Sichtfenster, die unterseitig mit Edelmetallschichten versehen sind. Dargestellt ist die Streuung bei zwei bekannten Kochflächen (a) und (b) und (c) bei einer nach der Erfindung gemäß Fig. 3 ausgebildeten Kochfläche,

Fig. 6    eine lichtmikroskopische Aufnahme einer Leuchtanzeige im Displaybereich (a) von einer kommerziell erhältlichen Kochfläche, und (b) von dem eingebrannten Präparat GPP 010106 nach Fig. 3, unterseitig aufgebracht auf eine glatte Glaskeramikplatte der Anmelderin,

Fig. 7    eine Graphik mit dem wellenlängenabhängigen Verlauf der Transmission im Displaybereich (a) von einer kommerziell erhältlichen Kochfläche und (b) von dem eingebrannten Präparat GPP 010106 nach Fig. 3, unterseitig aufgebracht auf eine glatte Glaskeramik der Anmelderin,

Fig. 8    eine schematische Darstellung der Messanordnung zur Bestimmung der Transmission und der Streuung in zwei Figurenteilen (a) und (b),

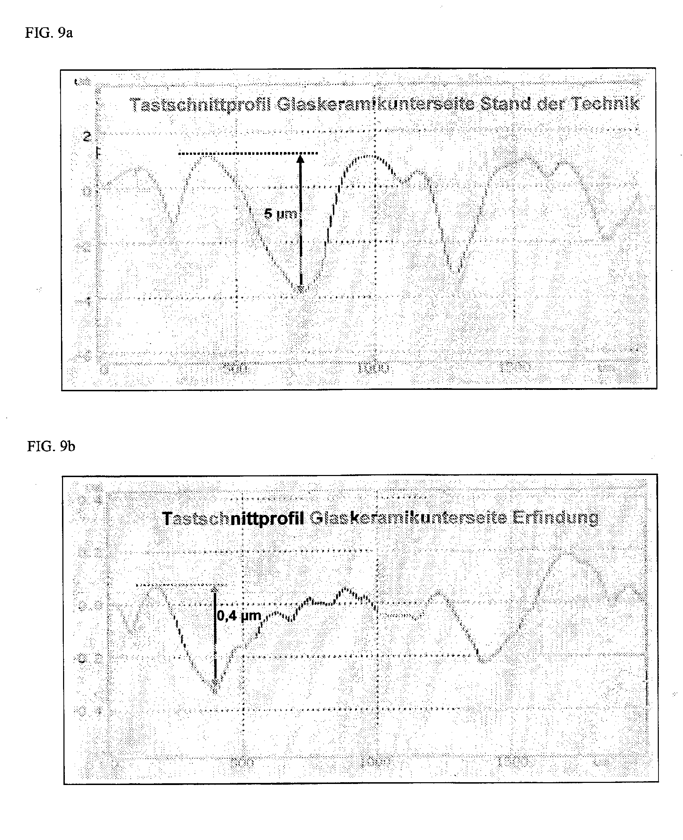

Fig. 9    in zwei Figurenteilen (a) und (b) jeweils eine Graphik mit den ungefilterten Primärprofilen von der Glaskeramikunterseite im Bereich des Sichtfensters von (a) einer kommerziell erhältlichen Kochfläche und von (b) einer Glaskeramik der Anmelderin, gemessen mit Tastschnittgerät "alpha-step 200" (Fa. TENCOR INSTRUMENTS),

Fig. 10   eine lichtmikroskopische Aufnahme der Edelmetallbeschichtung im Bereich des Sichtfensters einer kommerziell erhältlichen Kochfläche mit dunkleren Bereichen.

Fig. 1 zeigt eine oberseitig mit einem Punktraster dekorierte, aus einer Glaskeramikplatte 1 gebildeten Kochfläche, die einen Displaybereich 3 aufweist. Das Oberseitendekor 2 wird beispielsweise in bekannter Weise durch eine glasflussbasierte keramische Farbe ausgebildet, insbesondere aufgedruckt.

Wie die querschnittliche Ansicht nach Fig. 2, genommen entlang der Linie A - A in Fig. 1, zeigt, ist die Glaskeramikplatte 1 außerhalb des Displaybereichs 3 mit einer blickdichten Unterseitenbeschichtung 4 versehen. Der Displaybereich 3, unterhalb dessen symbolisch ein Leuchtmittel 5 für eine Leuchtanzeige und ein sogenannter Touch-Sensor 6 für einen Schaltvorgang angeordnet ist, ist gemäß der Erfindung auf der Unterseite mit einer speziellen Edelmetallbeschichtung 7 versehen.

Edelmetallschichten haben aufgrund ihrer metallischen Natur üblicherweise eine sehr hohe elektrische Leitfähigkeit, d. h. einen geringen elektrischen Flächenwiderstand $R_{sq}$, der i. d. R. bei ca. 1 - 10 Ohm pro Quadrat liegt. Aufgrund der hohen elektrischen Leitfähigkeit wäre die Integration von insoweit gängigen Touch-Sensoren, die nach dem kapazitiven Prinzip arbeiten, in den Displaybereich nicht möglich. Es wären nur nach optischem oder piezoelektrischem Prinzip arbeitende Sensoren möglich. Kapazitive Touch-Sensoren sind jedoch bei heutigen Kochmulden gängiger Standard, und es ist üblich, diese Sensoren neben den Leuchtmitteln im Displaybereich anzuordnen. Daher besteht ein Bedürfnis, auch bei einem erfindungsgemäß beschichteten Displaybereich Touch-Sensoren nach dem kapazitiven Prinzip im Kochfeld einzubauen.

Die insoweit störende elektrische Leitfähigkeit der Edelmetallschichten kann jedoch durch den Zusatz unedler Metalle, besonders durch den Zusatz von Silicium oder Bismut verringert werden (Günter Landgraf: Gold in Decoration of Glass and Ceramics, in: "Gold: Progress in Chemistry, Biochemistry and Technology", 1999 John Wiley & Sons (Hrsg.), S. 153 f.). Der Effekt wird besonders zur Herstellung von Edelmetalldekoren für Mikrowellengeschirr genutzt, bei dem der elektrische Flächenwiderstand im Kiloohm- oder Megaohm-Bereich liegen muss, damit kein Funkenschlag bei der Benutzung des Geschirrs in haushaltsüblichen Mikrowellengeräten auftritt.

Versuche mit Edelmetallpräparaten für Mikrowellengeschirr ("Mikrowellenpräparaten"), wie sie in EP 0 296 312 B1 und EP 1 043 294 A1 genannt werden, zeigen, dass Edelmetallschichten mit hohem elektrischen Widerstand prinzipiell zur unterseitigen Beschichtung von Glaskeramik-Kochflächen geeignet sind. Die Versuche ergaben jedoch auch, dass der Flächenwiderstand typischer Mikrowellenpräparate, z.B. GGP 2531 ("Mikrowellengold" von HERAEUS), trotz sorgfältig kontrollierter Einbrandbedingungen innerhalb eines Bereichs mit der typischen Größe eines Displayfensters von ca. 30 cm x 5 cm deutlich schwanken kann (vom Kiloohm- bis in den Megaohm-Bereich) und dass bei dem Reinigen der Beschichtung mit einem Papiertuch der Flächenwiderstand bis in den unteren Kiloohmbereich erniedrigt werden kann. Die Funktion kapazitiver Touch-Sensoren ist jedoch in den Bereichen, in denen der Flächenwiderstand im Kiloohmbereich lag, nicht gegeben.

Denn, damit die Funktion gängiger, nach dem kapazitiven Prinzip arbeitender Touchcontrol-Einheiten, z. B. der Produkte der Firma E.G.O., sichergestellt ist, muss der elektrische Flächenwiderstand der eingebrannten Edelmetallschicht noch tausendmal höher sein als bei üblichen Edelmetalldekoren für Mikrowellengeschirr; er muss im Mega-, besser im Giga-Ohm-Bereich liegen, also bei über $10^9$ Ω/Quadrat. Die Herstellung derartiger Edelmetallschichten mit äußerst geringer elektrischer Leitfähigkeit (hohem Flächenwiderstand) gelingt durch die Modifikation der Zusammensetzung der bekannten Mikrowellenpräparate (Edelmetallfarben für Mikrowellengeschirr), und zwar durch weitere Erhöhung der Oxidbildneranteile über das übliche Maß, z. B. 10 - 15 Gew.-% Oxidbildner, bezogen auf den eingebrannten Edelmetallfilm, hinaus und insbesondere durch den Einsatz von Silicium oder Bismut als Oxidbildner. Der Anteil der Oxidbildner, insbesondere Silicium und Bismut, muss in Summe bei mindestens 15 Gew.-%, besser in dem Bereich von 20 - 40 Gew.-%, liegen, bezogen auf die Zusammensetzung des eingebrannten Edelmetallfilms. Bei dem Einbrand eines Edelmetallpräparates mit derart erhöhtem Oxidbildneranteil, d.h. einer "Displayfarbe", entsteht neben legiertem Edelmetall (Gold, Platin, Palladium oder auch - mit Einschränkungen wegen der geringeren chemischen Beständigkeit - legiertem Silber) feinst verteiltes Metalloxid, insbesondere Siliziumoxid oder Bismutoxid, das die Edelmetallteilchen umgibt und dadurch voneinander elektrisch isoliert, so dass für solche Schichten eine extrem geringe Flächenleitfähigkeit, d. h. ein extrem hoher Flächenwiderstand im Mega- bis Gigaohmbereich, charakteristisch sind. Generell sind Oxide von Halbmetallen oder Oxide unedler Metalle einsetzbar.

Die eingebrannten Displayfarben ergeben je nach Art und Gehalt des Edelmetalls, der unedlen Metalle und der Halbmetalle metallisch schwarze, platingraue, schwarzbraun bis braune, goldene, gelbrote bis kupferfarbene Beschichtungen. Auch die Schichtdicke des Edelmetallfilms hat einen Einfluss auf die Farbe der Beschichtung. Die Farbe der Beschichtung kann auch durch Zusatz weiterer Metalle oder Halbmetalle in Form organischer Verbindungen zu dem Edelmetallpräparat beeinflusst werden, z.B. Nickel, Chrom oder Zirkon, aber auch Aluminium, Antimon, Barium, Bor, Calcium, Cer, Eisen, Cobalt, Germanium, Tantal, Zinn, Titan, Vanadium, Mangan, Eisen, Strontium, Molybdän, Ruthenium, Indium, Wolfram, Osmium, Iridium, Rhodium oder Zink. Die Abriebbeständigkeit kann durch diese als Haftvermittler bekannten Metalle ebenfalls weiter erhöht werden.

Überraschenderweise zeigte sich, dass nicht eingefärbte, transparente Glaskeramiken, die mit derartigen Edelmetallpräparaten beschichtet sind, für rotes Licht deutlich weniger sowie für violettes und dunkelblaues Licht deutlich stärker durchlässig sind als die Glaskeramiken mit herkömmlichen Edelmetallbeschichtungen im Sichtfensterbereich, wenn die Edelmetallbeschichtung sowohl weniger als 1 Gew.-% Eisenoxid, als auch weniger als 1 Gew.-% Titanoxid, bezogen auf die eingebrannte Edelmetallbeschichtung, enthält oder gänzlich frei von Eisen- und Titanoxid ist.

Die Metalle liegen in dem Edelmetallpräparat, der Displayfarbe, als lösliche organische Verbindungen, vorzugsweise als Resinate oder Sulforesinate, vor. Die Displayfarben benötigen daher bei ihrem Einbrand ausreichend Sauerstoff, damit die metallorganischen Verbindungen definiert verbrennen und sich das Oxid-Netzwerk vollständig ausbilden kann. Der Sauerstoff kann während des Einbrands als Luft zugeführt werden oder chemisch, z.B. aus Peroxiden, freigesetzt werden. Zur Ausbildung einer optimalen Haftund Kratzfestigkeit sind Maximaltemperaturen von 400 bis 1200 °C, insbesondere 800 - 850 °C, notwendig.

Bei geschickter Auswahl der metallorganischen Verbindungen, i. d. R. werden Metallresinate und -sulforesinate verwendet, und der Lösungsmittel können siebdruckfähige Edelmetallpasten hergestellt werden, die mit Siebdruck bei Verwendung von Siebgewebe der Stärke 140 - 31 im Displaybereich als vollflächige Beschichtung mit einem Flächenbelegungsgrad von 100 % aufgebracht werden können.

Eine silberne Kochfläche mit schwarzem Displaybereich kann z. B. sehr einfach und wirtschaftlich hergestellt werden, indem eine farblose, oberseitig bereits mit üblichen Emailfarben dekorierte Glaskeramik-Kochfläche unterseitig zunächst mit dem Edelmetallpräparat GPP 4510/S beschichtet wird, wobei der Displaybereich ausgespart, d.h. unbeschichtet, bleibt, und nach dem Trocknen des Präparats GPP 4510/S bis zur Grifffestigkeit der ausgesparte Displaybereich mit Displayfarbe GPP 010106 beschichtet wird. Die unterseitig aufgedruckten Edelmetallfarben ergeben dann nach dem gemeinsamen Einbrand eine Kochfläche mit schwarzer Beschichtung im Displaybereich und silberner Beschichtung im übrigen Bereich. Der Einbrand beider Farben kann auch getrennt erfolgen, der gemeinsame Einbrand ist aber normalerweise wirtschaftlicher.

Als Substratmaterial für die erfindungsgemäß zu beschichteten Glaskeramikplatten eignen sich besonders Glaskeramiken vom Typ $Li_2O$-$Al_2OSiO_2$, z. B. die farblose Glaskeramik nach der EP 1 170 264 B1 mit einer thermischen Ausdehnung von -10 · $10^{-7}$ $K^{-1}$ bis +30 · $10^{-7}$ $K^{-1}$ in dem Temperaturbereich 30 - 500 °C, deren bekannte Zusammensetzung u. a. in der nachstehenden Tabelle 1 angegeben ist:

Tab. 1 *Zusammensetzung geeigneter Glaskeramik-Substrate*

| Elementoxid | Glaskeramik-Zusammensetzung [Gew.-%] | |
|---|---|---|
| $SiO_2$ | 66 - 70 | 50 - 80 |
| $Al_2O_3$ | > 19,8 - 23 | 12 - 30 |
| $Li_2O$ | 3 - 4 | 1 - 6 |
| MgO | 0 - 1,5 | 0 - 5 |

(fortgesetzt)

| Elementoxid | Glaskeramik-Zusammensetzung [Gew.-%] | |
|---|---|---|
| ZnO | 1 - 2,2 | 0 - 5 |
| BaO | 0 - 2,5 | 0 - 8 |
| Na$_2$O | 0 - 1 | 0 - 5 |
| K$_2$O | 0 - 0,6 | 0 - 5 |
| TiO$_2$ | 2 - 3 | 0 - 8 |
| ZrO$_2$ | 0,5 - 2 | 0 - 7 |
| P$_2$O$_5$ | 0 - 1 | 0 - 7 |
| Sb$_2$O$_3$ | übliche Mengen | 0 - 4 |
| As$_2$O$_3$ | übliche Mengen | 0 - 2 |
| CaO | 0 - 0,5 | 0 |
| SrO | 0 - 1 | 0 |
| Quelle | EP 1 170 264 B1, Anspruch 14 - 18 | JP(A) 2004-193050 |

Die Beschichtung des Displaybereichs mit Edelmetallpräparaten kann auch mit anderen Verfahren als mit Siebdruck erfolgen, z.B. durch Sprühen, Tampondruck oder Stempelverfahren. Prinzipiell ist es auch möglich, die Edelmetallfilme im Displaybereich durch Sputtern aufzubringen. Jedoch birgt die bei Sputter- oder Sprühverfahren notwendige Maskierungstechnologie fertigungstechnische Nachteile.

Extreme Schichtdickenschwankungen, und damit wahrnehmbare Schwankungen in der Transmission, also letztendlich der Helligkeit der Leuchtanzeige, können minimiert werden, indem die Displayfarbe unter definierten Bedingungen, insbesondere bei gleichbleibender Temperatur, verarbeitet wird. Dem Einfluss der Aufkonzentration der Displayfarbe während des Siebdruckprozesses durch Verdunstung des Lösungsmittels kann durch bevorzugte Auswahl hochsiedender Lösungsmittel begegnet werden.

Durch Verdünnung der Präparate oder im Fall der Aufbringung der Beschichtung mit dem Siebdruckverfahren durch die Verwendung feinerer Siebgewebe kann die Schichtdicke der Edelmetallbeschichtungen verringert werden, wodurch die Transmission zunimmt. Die Schichtdicke kann so eingestellt werden, dass die Transmission der beschichteten Glaskeramik für das Licht gängiger Leuchtanzeigen (z.B. Leuchtanzeigen von E.G.O.) ausreichend ist, jedoch gleichzeitig noch nicht die Sicht auf Details in dem Inneren einer Kochmulde (auf Kabel etc.) in störender Weise zulässt. Beide Anforderungen an die Transparenz der beschichteten Glaskeramik werden von den beschriebenen Edelmetallschichten erfüllt, wenn die Transmission der beschichteten Glaskeramik für sichtbares Licht (Wellenlängenbereich 400 - 750 nm) bei 1,0 - 21 % liegt. Bei geringerer Transmission als 1,0 % sind die zur Zeit gängigen Leuchtanzeigen bei der in der Praxis üblichen Beleuchtung nicht mehr ausreichend sichtbar, bei höherer Transmission als 21 % ist bei den erfindungsgemäßen Edelmetallschichten die Sicht in das Innere der Kochmulde so gut möglich, dass Kabel, Leiterplatinen o. ä. deutlich erkannt werden können. Die Edelmetallbeschichtungen weisen bei geeigneter Transmission üblicherweise Schichtdicken von 150 - 250 nm auf. Die Edelmetallschichten bekannter Kochflächen haben im Displaybereich eine nahezu doppelte Schichtdicke von 300 - 400 nm. Die geringere Schichtdicke der erfindungsgemäß erzeugten Schichten ist u. U. ein wirtschaftlicher Vorteil, weil dadurch weniger Edelmetall verbraucht wird.

Das Licht der Leuchtanzeigen wird im Bereich des Sichtfensters durch eine Edelmetallschicht mit der beschriebenen Zusammensetzung nur unerheblich gestreut. Der Streulichtanteil liegt deutlich unter 1 %. Denn die Edelmetallbeschichtung ist frei von Teilchen, an denen das Licht in störender Weise gestreut werden könnte (z.B. Pigmente oder Kristallite mit einer Korngröße im Mikrometerbereich). Die Gefügestrukturanalyse (Fig. 3) zeigt Kristallite in der Beschichtung mit einer Größe unter 150 nm (in der Regel mit einer Größe von 10 - 60 nm), die offenbar aufgrund ihrer geringen räumlichen Ausdehnung deutlich unterhalb der Wellenlänge des durchtretenden Lichts (400 - 750 nm) nicht zu einer wahrnehmbaren Streuung führen.

Damit die unter der Glaskeramikplatte angeordneten Leuchtmittel gleichmäßig hell durch die beschichtete Glaskeramik leuchten, ohne dass dunklere Bereiche auftreten (Fig. 6a), ist es jedoch zusätzlich zu der geringen Streuung der Edelmetallbeschichtung notwendig, dass die Glaskeramikplatte selbst ausreichend glatt ist. Andernfalls fließt bei der unterseitigen Beschichtung der Glaskeramikplatte das Edelmetallpräparat in die Vertiefungen der Glaskeramikoberfläche und erzeugt dadurch lokal Bereiche, in denen die Schichtdicke des Edelmetallfilms stark erhöht ist. In diesen Bereichen treten in der Leuchtanzeige dann dunklere Stellen auf, die Leuchtanzeige erscheint "fleckig". Bei der Glaskeramikplatte, aus denen bekannte Kochflächen bestehen, wurden im Bereich der Sichtfenster Vertiefungen von bis zu 5 $\mu$m (Fig. 9a), bei einer Breite von ca. 250 $\mu$m und einer Länge von ca. 300 $\mu$m gefunden (Fig. 10). Kennzeichnend für die Beschaffenheit der Glaskeramikunterseite im Sichtfensterbereich dieser bekannten Kochflächen sind Vertiefungen von 1 - 5 $\mu$m mit einer lateralen Ausdehnung von mehreren 100 $\mu$m.

Die Sichtfenster in der Glaskeramik werden gleichmäßig durchschienen, wenn die Rauheit der Glaskeramik weniger als $R_a$ = 0,3 $\mu$m, insbesondere weniger als $R_a$ = 0,2 $\mu$, (gemessen in Anlehnung an DIN EN ISO 4287) beträgt und eventuell vorhandene Vertiefungen in der Glaskeramikunterseite weniger als 200 $\mu$m lang, 50 $\mu$m breit und 1,0 $\mu$m tief, insbesondere weniger als 0,5 $\mu$m tief, sind. Fig. 6b zeigt dieselbe Leuchtanzeige wie in Fig. 6a, mit dem einzigen Unterschied, dass die Leuchtanzeige durch eine ausreichend glatte Glaskeramikplattenoberfläche, die mit der erfindungsgemäßen Edelmetallbeschichtung versehen ist, hindurch scheint. Fig. 9b zeigt das zugehörige Tastschnittprofil einer solchen, glatten Glaskeramikplattenoberfläche. Die Segmente der Leuchtanzeige scheinen wesentlich gleichmäßiger hindurch als bei der bekannten Glaskeramikoberfläche mit rauer Unterseite.

Die übrigen Eigenschaften der edelmetallhaltigen Beschichtungen sind ausreichend: Die Beschichtungen erniedrigen aufgrund ihrer geringen Schichtdicke die Festigkeit des Glaskeramik-Substrates nicht oder nur geringfügig; die Stoßfestigkeit, geprüft mit einem Schlagprüfgerät, wird nach DIN EN 60335 bestanden, die mittlere Biegefestigkeit [DIN EN 1288-5 (R45)] liegt bei über 110 MPa. Die thermische Beständigkeit ist aufgrund der oxidischen Zusammensetzung und der chemischen Inertheit der Edelmetalle Gold, Platin, Palladium extrem gut (Dauerbelastung von 300 - 500 °C möglich). Ferner sind die Beschichtungen ausreichend widerstandsfähig gegenüber kondensierendem Wasserdampf oder Lebensmittelfett. In Sicht auf die eingebaute Kochfläche wurde bei der Benetzung mit Öl keine Verfärbung der Beschichtung beobachtet.

Ferner sind die Edelmetallschichten trotz ihrer geringen Schichtdicke deutlich kratzfester als die erwähnten Effektpigmentschichten. So konnte an den eingebrannten Edelmetallschichten mit einer abgerundeten Metallspitze (Krümmungsradius 0,5 mm), die mit 400 g belastet wurde, kein relevanter Schaden erzeugt werden. Denn die Kratzspur der Metallspitze war im eingebauten Zustand der Kochfläche in Draufsicht nicht erkennbar. Die poröse Effektpigmentschicht gemäß JP(A) 2003 086 337 hielt derselben Belastung nicht stand.

Die erzeugten Edelmetallschichten sind daher zur unterseitigen Beschichtung des Displaybereichs geeignet. Von den in JP H7-17409 genannten Edelmetallschichten unterscheiden sie sich neben ihrer definiert eingestellten Transparenz für sichtbares Licht vor allem durch ihren extrem hohen Flächenwiderstand.

Von anderen bekannten Edelmetallschichten, die bei bekannten Kochflächen verwendet werden, unterscheiden sich die erzeugten Edelmetallschichten durch die höhere Transparenz für violettes Licht und die deutlich geringere Transparenz für rotes Licht, insgesamt durch einen geringeren Unterschied der Transparenz für das sichtbare Licht im Wellenlängenbereich 400 - 750 nm. Die erzeugten Edelmetallschichten sind daher besser geeignet zur Herstellung von Sichtfenstern in Kochflächen, die der farbigen Darstellung von Informationen dienen sollen.

Ferner streuen die beschriebenen Glaskeramik-Kochflächen, die im Sichtfensterbereich mit einer erfindungsgemäßen Edelmetallschicht versehen sind, das Licht der Leuchtmittel noch weniger als die z. Z. bekannten Sichtfenster der einschlägigen, kommerziell erhältlichen Kochflächen und lassen im Gegensatz zu diesen Kochflächen das Leuchtmittel im Displaybereich gleichmäßig hell hindurch scheinen.

Prinzipiell sind auch Kochflächen herstellbar, bei denen die Displayfarbe vollflächig oder in Rastern (z.B. regelmäßig angeordneten Punkten, Strichen) über die gesamte Kochflächenunterseite (oder Teilbereiche) gedruckt wird und mit anderen Beschichtungen, z.B. unterseitig mit anderen Edelmetallfarben, z.B. dem bereits genannten, silbernen Edelmetallpräparat GPP 4510/S, Lacken auf Basis organischer Polymere (v.a. Silicon, Polyamid, Polyimid etc.), Sol-Gel-Farben oder keramischen Farben (auch oberseitig aufgebracht) kombiniert wird.

So kann z.B. eine Displayfarbe unterseitig auf eine Glaskeramik-Kochfläche in einem einzigen Siebdruckschritt im Displaybereich vollflächig und im übrigen Bereich in einem Punktraster (oder einem beliebig anderen Raster) aufgebracht werden. Wird nun nach dem Trocknen der Displayfarbe die Kochfläche (bis auf den Displaybereich) mit GPP 4510/S ("silberne Edelmetallfarbe") beschichtet, so wird nach dem Einbrand beider Edelmetallpräparate eine Kochfläche mit schwarzem Displaybereich und schwarz gepunktetem, silbernen übrigen Bereich erhalten. Bei Unverträglichkeit beider Edelmetallpräparate können ähnliche Kochflächen durch aufeinander folgende Einbrände der Farben erhalten werden. Aufgrund der geringen Schichtdicke der Edelmetallfilme waren die Haftfestigkeit und der Ausbrand vollkommen zufrieden stellend. Nach Ausbrand lag die Schichtdicke in dem Bereich, wo beide Metallfilme überlappen, bei 250 - 400 nm.

In dem Displaybereich einer solchen Kochfläche können nun nicht nur kapazitiv arbeitende Touch-Sensoren zur Steuerung der Funktionen der Kochmulde angeordnet werden, sondern auch mehrfarbige Leuchtanzeigen.

Die beschriebenen Edelmetallschichten sind gefärbten Kunststofffolien und Beschichtungen auf organischer Basis (z. B. Polyurethan-, Silicon-, Epoxidharz-Lacken) hinsichtlich mechanischer, chemischer und thermischer Beständigkeit deutlich überlegen. Derartige Lacke, die organische Pigmente (Azopigmente, polyzyklische Pigmente), Pigmentruß, anorganische Pigmente oder Nanopartikel enthalten können, werden zur Beschichtung von Sichtfenstern in Bedienblenden von Backöfen, Mikrowellengeräten, Geschirrspülern oder elektronischen Unterhaltungsgeräten verwendet, um die Sicht in das Innere der Geräte zu verhindern.

**Prüfmethoden**

Messung der Rauheit

Zur Bestimmung der Rauheit wurden in Anlehnung an DIN EN ISO 4288 mit einem optischen Verfahren (Gerät FRT MicroGlider®) je 5 Profile mit der Taststrecke 5,6 mm gemessen und aus den Profildaten nach DIN EN ISO 4287 die Rauheitswerte mit zugehöriger Standardabweichung berechnet.

Messung der Transmission

Zur Bestimmung der Transmission einer beschichteten Glaskeramik wurde die Probe gemäß Fig. 8a in den Strahlengang einer Lichtquelle gebracht und hinter der Probe das durchtretende Licht von einem kugelförmigen Detektor erfasst. Durch den Vergleich des Strahlungsflusses des austretenden (durchgelassenen) Lichtstrahls $\Phi_{ex}$ mit dem Strahlungsfluss des einfallenden Lichtstrahls $\Phi_{in}$ wurde die Transmission $T_i$ mit $T_i = \Phi_{ex}/ \Phi_{in}$ berechnet.

Bestimmung der Streuung

Zur Bestimmung der Lichtstreuung wurde zunächst die Transmissionsmessung gemäß der in Fig. 8a dargestellten Messgeometrie durchgeführt, d.h., das gesamte Licht $T_i$, das durch die Probe hindurchtrat, wurde erfasst. In einer weiteren Messung mit der Messgeometrie gemäß Fig. 8b, bei der der Abstand der Probe zu dem Detektor sehr groß (50 cm) war, wurde nur noch dasjenige Licht $T_{ger}$ erfasst, das von der Probe nicht abgelenkt, d. h. nicht "gestreut", wurde. Durch Subtraktion beider gemessener Transmissionen wurde der Anteil des Streulichts S bestimmt: $S = T_i - T_{ger}$

Messung des elektrischen Flächenwiderstands (Ohm/Quadrat)

Der Bereich, in dem der elektrische Flächenwiderstand der Edelmetallschichten liegt, wurde hinreichend genau mit einem Ohmmeter bestimmt, indem die beiden Elektroden des Messgeräts möglichst nahe beieinander, d.h. mit ca. 0,5 - 1 mm Abstand, auf die Beschichtung aufgesetzt wurden. Der vom Messgerät angezeigte Widerstand war in guter Näherung gleich dem Flächenwiderstand.

Die genaue Bestimmung des elektrischen Flächenwiderstandes erfolgte nach der Methode von Valdes (L.B. Valdes, Proc. IRE, Februar 1954, S. 420-427), bei der ein Messkopf mit vier äquidistanten Messspitzen (Abstand a), die linear angeordnet sind, verwendet wird. Die zwei äußeren Messspitzen dienen der Einprägung eines konstanten Stromes, über die zwei inneren Messspitzen wird mit einem Elektrometer hochohmig ein Spannungsabfall gemessen. Unter den Voraussetzungen vernachlässigbarer Schichtdicke d (d << a) bei lateral weit ausgedehnten Schichten (w >> a) im Vergleich zum Messspitzenabstand a lässt sich der Flächenwiderstand $R_{sq}$ aus Strom I und Spannung U errechnen:

$$R_{sq}=( \pi / \ln 2) \cdot (U/I) = 4{,}53 \cdot U/I$$

**Ausführungsbeispiel**

Schwarze Displayfarbe (mit geringer elektrischer Leitfähigkeit)

Eine beidseitig glatte, farblose Glaskeramikplatte (1) (ca. 60 cm tief, 80 cm breit und 4 mm dick) mit der Zusammensetzung gemäß EP 1 170 264 B1 (Tab.1, linke Spalte) wurde oberseitig mit einer keramischen Dekorfarbe gemäß DE 197 21 737 C1 in einem regelmäßigen Punktraster bis auf den Bereich des rechteckigen Displayfensters (3) beschichtet und keramisiert.

Anschließend wurde auf die Unterseite der keramisierten Glaskeramikplatte das kommerziell erhältliche Edelmetallpräparat GPP 4510/S (Fa. HERAEUS, Hanau) mittels Siebdruck (Siebweite 140-31) aufgebracht, wobei der Displaybereich (3) ausgespart (unbeschichtet) blieb. Diese Beschichtung (4) wurde ca. 3 Std. bei 20 °C getrocknet. Dann wurde der Displaybereich (3) unterseitig mit dem Edelmetallpräparat GPP 010106 (HERAEUS, Hanau) ebenfalls mit Siebdruck (Siebweite 140-31) beschichtet (Schicht 7). Die Edelmetallpräparate wurden 1 Stunde bei 830 °C eingebrannt.

Die fertige Kochfläche wies im Displaybereich eine schwarze, im übrigen Bereich eine silberne Unterseitenbeschichtung auf.

Der schwarze Edelmetallfilm im Displaybereich setzte sich zusammen (in Gewichtsprozent) aus 40 - 60 % Gold, 10 - 20 % Platin, jeweils 5 - 20 % Siliciumoxid und Bismutoxid sowie 0 - 10 % Nickeloxid, Chromoxid und Zirkonoxid.

Die Schichtdicke der eingebrannten Displayfarbe GPP 010106 betrug 170 ± 20 nm (Fig. 3)

Die Lichtdurchlässigkeit und die Funktion kapazitiver Touch-Sensoren im Bereich der schwarzen Beschichtung (im Displaybereich) wurden mit einer Touchcontrol-Einheit von E.G.O. überprüft.

Die Leuchtanzeigen waren ausreichend hell und hatten scharfe Ränder, d. h. die Anzeigen waren nicht verschwommen, die Streuung der beschichteten Glaskeramik betrug nur 0,2 - 0,3 %. Fig. 5 zeigt den Verlauf der Streuung in Abhängigkeit von der Wellenlänge im Vergleich zu der Streuung der Edelmetallbeschichtungen des einschlägigen kommerziellen Produktes. Die Streuung dieser beschichteten Glaskeramikplatte, die durch die Kurven (a) und (b) wiedergegeben wird, ist mit bis zu 3 % deutlich höher als die Streuung der nach diesem erfindungsgemäßen Ausführungsbeispiel beschichteten Glaskeramikplatte. Fig. 3 zeigt eine Aufnahme der Gefügestruktur, in der Kristallite mit Ausdehnungen von maximal 130 nm erkennbar sind.

Die Rauheit der Glaskeramikplattenoberfläche betrug nur $R_a$ = 0,2 $\mu$m, extreme Vertiefungen wie bei der bekannten einschlägigen Glaskeramikplatte traten nicht auf. Die Glaskeramikoberseiten wiesen maximal bekannte einschlägige Vertiefungen von 0,5 $\mu$m auf. Die Anzeige war daher frei von dunklen Bereichen (Fig. 6b).

Die Transmission der erfindungsgemäß schwarz beschichteten Glaskeramik betrug 2,8 % für violettes Licht der Wellenlänge 400 nm und 13,5 % für rotes Licht der Wellenlänge 750 nm. Die Transmission für rotes Licht war also deutlich geringer als bei den einschlägigen bekannten Kochflächen (42 - 45 %), während die Transmission für violettes Licht deutlich höher lag als bei den einschlägigen bekannten Kochflächen (0,5 - 0,6 %). Fig. 7 zeigt die zugehörigen Transmissionskurven. Die Beschichtung GPP 010106 ist daher besser für mehrfarbige Leuchtanzeigen geeignet als die Beschichtung der bekannten Kochflächen.

Mit Hilfe der kapazitiven Touch-Sensoren, die wie die Leuchtanzeigen im Displaybereich unterhalb des Sichtfensters angeordnet waren, konnten die Kochzonen problemlos angesteuert und die Heizstufe ausgewählt werden. Der elektrische Flächenwiderstand betrug 20 ± 2 GΩ/Quadrat.

Der elektrische Widerstand konnte durch Putzen der Beschichtung (mit einem Papiertuch) nicht verringert werden.

Die Kratzbeständigkeit der Beschichtung war sehr gut. So konnten mit einer abgerundeten Metallspitze mit einem Krümmungsradius von 0,5 mm, die mit 400 g belastet war, keine Kratzer erzeugt werden, die im eingebauten Zustand der Kochfläche von oben erkennbar gewesen wären.

Die Bewertung der Blickdichtheit erfolgte im eingebauten Zustand bei praxisrelevanter Beleuchtung (Dunstabzugshaube DET 77 mit integrierten Leuchten von NEF) aus einem Abstand von 85 cm auf die eingebaute Kochfläche. Der Blick in das Innere der Kochmulde war nicht möglich (Kabel, Platinen o. ä. waren nicht erkennbar).

**Bezugszeichenliste**

| | |
|---|---|
| 1 | Glaskeramikplatte |
| 2 | Oberseitendekor |
| 3 | Displaybereich (oder Sichtfensterbereich) |
| 4 | Blickdichte Unterseitenbeschichtung |
| 5 | Leuchtmittel für Leuchtanzeigen |
| 6 | Touch-Sensor |
| 7 | Edelmetallschicht |
| 8 | Lichtquelle |
| 9 | einfallendes Licht |
| 10 | durchgetretenes Licht |
| 11 | Detektor (Integrationskugel) |

**Patentansprüche**

1. Kochfeld mit einer Glaskeramikplatte (1) als Kochfläche, welche aus einem nicht eingefärbten Glaskeramikmaterial besteht, sowie welche mindestens ein Sichtfenster (3) und eine blickdichte unterseitige Beschichtung (4) aufweist, die im Bereich des Sichtfensters (3), das mit einer gesonderten Beschichtung (7) versehen ist, ausgespart ist, **dadurch gekennzeichnet, dass** die gesonderte Beschichtung (7)

- aus einem eingebrannten Edelmetallpräparat gebildet ist und einen elektrischen Flächenwiderstand über 1 Megaohm/Quadrat hat,

**dass** die beschichtete Glaskeramikplatte im Bereich des Sichtfensters (3) für das sichtbare Licht (400 nm - 750 nm)

- eine Transmission im Bereich von 1,0 bis 21,0 % sowie
- eine Streuung im Bereich von 0,0 bis 1,0 % hat, und

**dass** die gesonderte Beschichtung (7) aus Gold oder Platin oder Palladium oder Legierungen davon besteht und Oxide von Halbmetallen oder Oxide unedler Metalle enthält, und
**dass** der Anteil der Oxide in der gesonderten Beschichtung mindestens 15 Gew.-% bezogen auf den eingebrannten Edelmetallfilm beträgt.

2. Kochfeld nach Anspruch 1, **dadurch gekennzeichnet, dass** die Transmission des Sichtfensters (3) für das violette Licht (400 nm Wellenlänge) im Bereich 1,4 - 7.0 % liegt.

3. Kochfeld nach Anspruch 1 oder Anspruch 2, **dadurch gekennzeichnet, dass** die Transmission des Sichtfensters (3) für das rote Licht (750 nm Wellenlänge) im Bereich 7,0 -14,0 % liegt.

4. Kochfeld nach einem der Ansprüche 1 bis 3, **dadurch gekennzeichnet, dass** im Sichtfenster (3) die Streuung für das sichtbare Licht im Bereich von 0,1 - 0,5 %, vorzugsweise 0,2 - 0,3 % liegt.

5. Kochfeld nach einem der Ansprüche 1 bis 4, **dadurch gekennzeichnet,** da der Flächenwiderstand der gesonderten Beschichtung Im Bereich von $1 \cdot 10^6$ bis $100 \cdot 10^9$ Ohm/Quadrat, vorzugsweise bei 1 - 20 Gigaohm/Quadrat liegt.

6. Kochfeld nach einem der Ansprüche 1 bis 5, **dadurch gekennzeichnet, dass** die Schichtdicke der gesonderten Schicht (7) im Bereich des Sichtfensters (3) $\leq$ 250 nm ist.

7. Kochfeld nach Anspruch 6, **dadurch gekennzeichnet, dass** die Schichtdicke der gesonderten Beschichtung (7) im Bereich von 150 - 200 nm liegt.

8. Kochfeld nach Anspruch 1, **dadurch gekennzeichnet, dass** die gesonderte Beschichtung (7) Oxide der Elemente Silicium, Bismut, Nickel, Eisen, Chrom, Zirkon, Aluminium, Antimon, Barium, Bor, Calcium, Cer, Cobalt, Germanium, Tantal, Zinn, Titan, Vanadium, Mangan, Strontium, Molybdän, Ruthenium, Indium, Wolfram, Osmium, Iridium, Rhodium oder Zink enthält.

9. Kochfeld nach einem der Ansprüche 1 und 8, **dadurch gekennzeichnet, dass** die gesonderte Beschichtung (7) weniger als 1,0 Ges.-% Eisenoxid und Titanoxid, bezogen auf den eingebrannten Edelmetallfilm, enthält.

10. Kochfeld nach einem der Ansprüche 1 oder 8 oder 9, **dadurch gekennzeichnet, dass** die gesonderte Beschichtung (7) Siliciumoxid und/oder Bismutoxid enthält.

11. Kochfeld nach Anspruch 1, **dadurch gekennzeichnet, dass** der Anteil der Oxide in der gesonderten Schicht im Bereich von 20 - 40 Gew.-% bezogen auf den eingebrannten Edelmetallfilm liegt.

12. Kochfeld nach einem der Ansprüche 1 bis 11, **dadurch gekennzeichnet, dass** die Rauheit mindestens einer der beiden Glaskeramikoberflächen im Bereich des Sichtfensters (3) einen $R_a$-Wert $\leq 0,3$ $\mu$m aufweist.

13. Kochfeld nach Anspruch 12, **dadurch gekennzeichnet, dass** nur die betriebliche Unterseite der Glaskeramikplatte (1) für deren Rauheit den $R_a$-Wert $\leq 0,3$ aufweist.

14. Kochfeld nach einem der Ansprüche 1 bis 13, **dadurch gekennzeichnet, dass** die Glaskeramikoberflächen Vertiefungen, die höchstens 1 $\mu$ tief sind, insbesondere höchstens 0,5 $\mu$ tief sind, aufweisen.

**Claims**

1. Hob with a glass ceramic plate (1) as cooking surface, consisting of a non-pigmented glass ceramic material, further comprising at least one inspection window (3) and an opaque layer (4) on the bottom side that is left blank in the area of the inspection window (7), the inspection window (7) being equipped with a separate coating (7), **characterized in
that** the separate coating (7)

- is composed of a burnt-in precious metal compound and has an electric surface resistance above 1 megaohm/squared,

**that** the coated glass ceramic plate (1) has

- a transmission in the range of 1,0 to 21,0% and
- a scattering in the range of 0,0 to 1,0%

for the visible light (400 nm - 750 nm) in the area of the inspection window (3), and
**that** the separate coating (7) consists of gold or platinum or palladium or alloys thereof and contains oxides of metalloids or oxides of non-precious metals, and that the portion of the oxides in the separate coating (7) accounts for at least 15 wt.-% with regard to the burnt-in film of precious metal.

2. Hob according to claim 1, **characterized in that** the transmission of the inspection window (3) for violet light (wavelength of 400 nm) is in the range of 1,4 to 7,0%.

3. Hob according to claim 1 or claim 2, **characterized in that** the transmission of the inspection window (3) for red light (wavelength 750 nm) is in the range of 7,0 to 14,0%.

4. Hob according to claims 1 to 3, **characterized in that** the scattering for the visible light in the inspection window is in the range of 0,1 to 0,5%, preferably 0,2 to 0,3%.

5. Hob according to claims 1 to 4, **characterized in that** the surface resistance of the separate coating (7) is in the range of $1*10^6$ to $100*10^9$ ohm/squared, preferably at 1 to 20 gigaohm/squared.

6. Hob according to one of the claims 1 to 5, **characterized in that** the coating thickness of the separate coating (7) in the area of the inspection window (3) is $\leq 250$ nm.

7. Hob according to claim 6, **characterized in that** the coating thickness of the separate coating (7) is in the range of 150 to 200 nm.

8. Hob according to claim 1, **characterized in that** the separate coating (7) comprises oxides of the elements silicon, bismuth, nickel, iron, chrome, zirconium, aluminum, antimony, barium, boron, calcium, cerium, cobalt, germanium, tantalum, tin, titanium, vanadium, manganese, strontium, molybdenum, ruthenium, indium, tungsten, osmium, iridium, rhodium or zinc.

9. Hob according to one of the claims 1 and 8, **characterized in that** the separate coating (7) comprises less than 1,0 wt.-% of iron oxide and titanium oxide with regard to the burnt-in precious metal film.

10. Hob according to one of the claims 1 or 8 or 9, **characterized in that** the separate coating (7) contains silicon oxide and/or bismuth oxide.

11. Hob according to claim 1, **characterized in that** the portion of the oxides in the separate coating (7) is in the range of 20 to 40 wt.-% with regard to the burnt-in metal film.

12. Hob according to one of the claims 1 to 11, **characterized in that** the roughness of at least one of the two surfaces of the glass ceramic in the area of the inspection window (3) has an $R_a$-value $\leq 0,3$ $\mu$m.

13. Hob according to claim 12, **characterized in that** only the roughness of the operational bottom surface of the glass ceramic plate (1) has an $R_a$-value $\leq 0,3$ $\mu$m.

14. Hob according to one of the claims 1 to 13, **characterized in that** the surface of the glass ceramic has recesses having a depth at the most of 1 $\mu$, in particular at the most of 0,5 $\mu$.

**Revendications**

1. Panneau de cuisson doté d'une plaque (1) en vitrocéramique servant de surface de cuisson et constituée d'un matériau vitrocéramique non coloré, et présentant au moins une fenêtre d'observation (3) et un revêtement inférieur opaque (4) découpé au niveau de la fenêtre d'observation (3) dotée d'un revêtement spécial (7),
   **caractérisé en ce que**
   le revêtement spécial (7) est formé d'une préparation en métal présentant une résistance électrique de surface supérieure à 1 mégaohm/carré,
   **en ce qu'**au niveau de la fenêtre d'observation (3) et pour la lumière visible (400 nm-750 nm), la plaque en vitrocéramique revêtue présente une transmission de l'ordre de 1,0 à 21,0 % ainsi qu'une diffusion comprise entre 0,0 et 1,0 %,
   **en ce que** le revêtement spécial (7) est constitué d'or, de platine, de palladium ou de leurs alliages et contient des oxydes de semi-métaux ou des oxydes de métaux non précieux et
   **en ce que** la teneur en oxyde du revêtement spécial représente au moins 15 % en poids par rapport au film de métal précieux incorporé par cuisson.

2. Panneau de cuisson selon la revendication 1, **caractérisé en ce que** la transmission de la fenêtre d'observation (3) pour la lumière violette (400 nm de longueur d'onde) est comprise entre 1,4 et 7,0 %.

3. Panneau de cuisson selon la revendication 1 ou la revendication 2, **caractérisé en ce que** la transmission de la fenêtre d'observation (3) pour la lumière rouge (750 nm de longueur d'onde) est comprise entre 7,0 et 14 %.

4. Panneau de cuisson selon l'une des revendications 1 à 3, **caractérisé en ce que** dans la fenêtre d'observation (3), la diffusion de la lumière visible est comprise entre 0,1 et 0,5 % et de préférence entre 0,2 et 0,3 %.

5. Panneau de cuisson selon l'une des revendications 1 à 4, **caractérisé en ce que** la résistance de surface du revêtement spécial est comprise entre $1 \times 10^6$ et $100 \times 10^9$ ohm/carré et de préférence entre 1 et 20 gigaohm/carré.

6. Panneau de cuisson selon l'une des revendications 1 à 5, **caractérisé en ce que** l'épaisseur de la couche spéciale (7) au niveau de la fenêtre d'observation (3) est $\leq$ 250 nm.

7. Panneau de cuisson selon la revendication 6, **caractérisé en ce que** l'épaisseur du revêtement spécial (7) est de l'ordre de 150 à 200 nm.

8. Panneau de cuisson selon la revendication 1, **caractérisé en ce que** le revêtement spécial (7) contient des oxydes des éléments silicium, bismuth, nickel, fer, chrome, zirconium, aluminium, antimoine, baryum, bore, calcium, cérium, cobalt, germanium, tantale, étain, titane, vanadium, manganèse, strontium, molybdène, ruthénium, indium, tungstène, osmium, iridium, rhodium et zinc.

9. Panneau de cuisson selon l'une des revendications 1 et 8, **caractérisé en ce que** le revêtement spécial (7) contient moins de 1,0 % en poids d'oxyde de fer et d'oxyde de titane par rapport au film de métal précieux incorporé par cuisson.

10. Panneau de cuisson selon l'une des revendications 1 ou 8 ou 9, **caractérisé en ce que** le revêtement spécial (7) contient de l'oxyde de silicium et/ou de l'oxyde de bismuth.

11. Panneau de cuisson selon la revendication 1, **caractérisé en ce que** la teneur en oxyde de la couche spéciale est comprise entre 20 et 40 % en poids par rapport au film de métal précieux incorporé par cuisson.

12. Panneau de cuisson selon l'une des revendications 1 à 11, **caractérisé en ce que** la rugosité d'au moins l'une des deux surfaces de vitrocéramique au niveau de la fenêtre d'observation (3) présente un coefficient $R_a \leq 0,3$ $\mu$m.

13. Panneau de cuisson selon la revendication 12, **caractérisé en ce que** seule la face de la plaque (1) de vitrocéramique située dans le bas en fonctionnement présente une rugosité d'un coefficient $R_a \leq 0,3$.

14. Panneau de cuisson selon l'une des revendications 1 à 13, **caractérisé en ce que** les surfaces de vitrocéramique présentent des creux d'une profondeur maximale de 1 $\mu$m et en particulier d'au plus 0,5 $\mu$m.

FIG. 1

FIG. 2

EP 1 867 613 B1

FIG. 3

FIG. 4

15

FIG. 5

FIG. 6

FIG. 7

FIG. 8a

FIG. 8b

FIG. 9a

Tastschnittprofil Glaskeramikunterseite Stand der Technik

5 µm

FIG. 9b

Tastschnittprofil Glaskeramikunterseite Erfindung

0,4 µm

FIG. 10

Sichtfensterbereich mit Edelmetallbeschichtung

dunkle Bereiche

500 µm

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0438656 B1
- EP 1435759 B1
- EP 1267593 B1
- JP 2003338359 A
- JP 2003338360 A
- JP 2005090906 A
- WO 03098115 A1
- DE 29902875 U1
- EP 1267593 A2
- JP 2003086337 A

- JP 2003297540 A
- US 20050224491 A1
- DE 04104983 C1
- EP 0296312 B1
- EP 1043294 A1
- EP 1170264 B1
- JP 2004193050 A
- JP H717409 B
- DE 19721737 C1

**In der Beschreibung aufgeführte Nicht-Patentliteratur**

- **HOLLEMANN-WIBERG.** Lehrbuch der anorganischen Chemie, 91-100. Walter de Gruyter, 1985, 103

- Gold: Progress in Chemistry, Biochemistry and Technology. Günter Landgraf: Gold in Decoration of Glass and Ceramics. John Wiley & Sons, 1999, 153 f
- **L.B. VALDES.** *Proc. IRE,* Februar 1954, 420-427